# EUROPEAN PATENT SPECIFICATION

(11) **EP 1 901 331 B1**
(45) Date of publication and mention of the grant of the patent: **03.10.2012**
(21) Application number: 07115340.7
(22) Date of filing: 30.08.2007
(51) Int. Cl.: H01J 17/04, H01J 17/49

(54) **Plasma display panel**
Plasmaanzeigetafel
Panneau d'affichage à plasma

(30) Priority: 15.09.2006 KR 20060089596
(43) Date of publication of application: 19.03.2008
(73) Proprietor: Samsung SDI Co., Ltd., Gyeonggi-do (KR)
(72) Inventor: Kim, Chul-Hong, Kiheung-eup, Yongin-si Gyeonggi-do (KR); Jeong, Hyun-Mi, Kiheung-eup, Yongin-si, Gyeonggi-do (KR)
(74) Representative: Killin, Stephen James

(56) References cited:
- JP-A- 8 031 327
- US-A1- 2002 096 666
- US-A1- 2003 108 753
- US-A1- 2005 271 979
- US-A1- 2006 119 265

## Description

The present invention relates to an electrode-forming composition and a plasma display panel manufactured using the same, and more particularly, to an electrode-forming composition of which a composition ratio is optimized so as to protect an electrode against a migration effect and an edge-curl, as well as a plasma display panel manufactured using the same.

As is well known, a plasma display panel (hereinafter referred to as "PDP") is a display device that forms an image by using visible light beams of red (R), green (G), and blue (B) generated when vacuum ultra-violet (VUV) rays, which are emitted from plasma obtained through a gas discharge, excite a phosphor material.

With the PDP, the thickness of a very large screen with a diagonal greater than 152 cm (60 inches) can be minimized to less than 10 cm. Since the PDP is a self-emissive device like a CRT, distortion does not take place in terms of color reproduction capability and viewing angle. Further, the manufacturing process of the PDP is simpler than that of a liquid crystal display (LCD). Therefore, the PDP, having merits of high productivity and cost competitiveness, is highly expected to be used for television sets and industrial flat displays.

The structure of the PDP has been in development since 1970. A currently well-known structure thereof is an AC three-electrode surface discharge structure.

A PDP employing the AC three-electrode surface discharge structure is generally constructed such that pairs of display electrodes are formed on a front substrate with their surfaces facing the front substrate, and address electrodes are formed on the rear substrate spaced apart from the front substrate. A barrier rib is disposed between the front and rear substrates to define a plurality of discharge cells. The discharge cells are formed along positions where the display electrodes cross the address electrodes. Phosphor layers are formed inside the discharge cells, and a discharge gas is injected therein. The injected discharge gas produces a discharge within the discharge cells according to a voltage supplied through the above-mentioned electrodes. Ultra-violet rays generated by the discharge collide against the phosphor layers inside the discharge cells, thereby generating visible light.

In the PDP employing this structure, a discharge cell to be turned on and a discharge cell not to be turned on are selected by using the memory characteristic of wall charges. The selected discharge cell is discharged to display an image.

JP8031327 discloses a DC-type plasma display panel comprising a glass layer located between an anode electrode and a back plate consisting of insulative material, in which the glass layer acts as an electrode reinforcing layer for reinforcing the attachment between the electrode and the back plate.

A PDP having a 107cm (42-inch) diagonal screen size with resolution of XGA (1024×768) has recently become available in the market. Ultimately, there is a demand for a display device capable of displaying a Full-HD (high definition) image. In order for a PDP to display a Full-HD (1920×1080) image, a discharge cell has to be reduced in size to achieve that higher density. Accordingly, the width and pitch of the electrodes need to be more densely formed.

In general, the PDP includes an address electrode formed of silver (Ag) having high electric conductivity and that is relatively inexpensive. However, when the width of the electrodes and the space between them (pitch) is narrower in order to achieve the desired higher density, the electrodes may become electrically open or a short circuit may occur due to a migration effect occurring at the edges of neighboring electrodes. The migration effect may arise from various causes. In many cases, it is caused by chemical or physical problems stemming from external air and/or temperature. The external air and/or temperature eventually promote diffusion of the photosensitive silver electrode generally used for an electrode. This may electrically open the circuit between discharge and address electrodes or short circuit the electrodes by forming a bridge between two neighboring electrodes.

Thus, various attempts are underway to prevent defects with silver electrodes caused by the migration effect.

For example, there is a method in which electrodes where the migration effect occurs are treated with various air-proof/moisture-proof materials, and organic/non-organic foreign materials between the electrodes are removed as much as possible through cleansing and the like. When an electronic device having semiconductors and other electrode wires is used, instead of the highly responsive material of silver, an extremely expensive metal (e.g. gold, platinum, etc.) is used. Alternatively, a full solid solution of palladium (Pd) or the like is added with silver.

When a PDP generally including a silver electrode is used, in order to reduce electrode manufacturing operations and material costs, characteristics of the electrode itself have to be controlled so as to prevent the migration effect.

An address electrode is formed such that a photosensitive silver paste is applied on a rear substrate and is then dried to form an electrode layer, and the electrode layer is exposed and developed in such a way as to form patterns on the electrode.

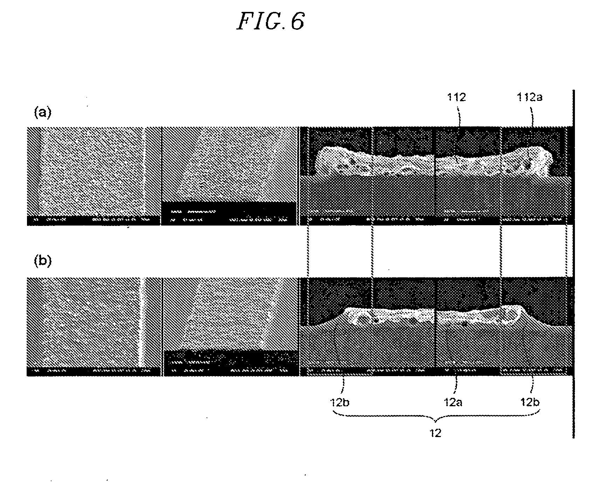

However, in the process of forming this address electrode, if exposure and development processes are not properly controlled, an edge-curl may take place whereby both edges of the address electrode are curled up (see FIGURE 6(a)).

The edge-curl may cause concentration of the discharge voltage that is supplied to the address electrode, and damage in the dielectric layer that covers the edge-curl during a gas discharge. Accordingly, product reliability decreases.

The present description provides an electrode-forming composition where the composition ratio of the components is regulated to enhance product reliability by preventing a migration effect and an edge-curl occurring at an electrode.

The present description also provides a plasma display panel manufactured by using an electrode paste having the regulated composition ratio mentioned above.

There is provided an electrode-forming composition including frit, a metal powder, and a vehicle, wherein the metal powder and the frit are contained in a weight ratio of 52 to 62: 5 to 15.

The frit may contain B₂O₃ and BaO, and the weight ratio of BaO to B₂O₃ may be equal to or greater than 1, or within a range of 1 to 5. The frit may be selected from the group consisting of SiO₂, PbO, Bi₂O₃, ZnO, B₂O₃, and BaO, and combinations thereof.

In addition, the metal powder may be selected from the group consisting of silver (Ag), gold (Au), aluminum (Al), copper (Cu), nickel (Ni), chromium (Cr), zinc (Zn), tin (Sn), an alloy of silver-palladium (Ag-Pd), and combinations thereof. Further, the metal powder may be a silver (Ag) powder.

The vehicle may include an organic solvent and a binder.

The organic solvent may be selected from the group consisting of ketones, alcohols, ether alcohols, saturated fatty mono carboxylic acid alkyl esters, lactic acid esters, ether esters, and combinations thereof.

The binder may be selected from a group consisting of an acrylic resin, a styrene resin, a novolak resin, a polyester resin, and combinations thereof.

There is provided a plasma display panel including: first and second substrates that face each other with a predetermined distance between; a first electrode formed on the first substrate and extending in a first direction; a dielectric layer formed on the first substrate to cover the first electrode; a second electrode spaced apart from the first electrode, formed on the second substrate, and extending in a second direction crossing the first direction; a barrier rib in the space between the first substrate and the second substrate where the barrier rib defines a plurality of discharge cells; and a phosphor layer formed within each discharge cell, wherein the first electrode contains the metal powder and the frit in a weight ratio of 52 to 62: 5 to 15.

The frit may contain B₂O₃ and BaO, and the weight ratio of the BaO to B₂O₃ may be equal to or greater than 1. Further, the metal powder may be a silver (Ag) powder.

According to another aspect of the present invention, there is provided a plasma display panel including: first and second substrates that face each other with a predetermined distance between; a first electrode formed on the first substrate and extending in a first direction; a dielectric layer formed on the first substrate to cover the first electrode; a second electrode spaced apart from the first electrode, formed on the second substrate, and extending in a second direction crossing the first direction; a barrier rib in a space between the first substrate and the second substrate where the barrier rib defines a plurality of discharge cells; and a phosphor layer formed within each discharge cell, wherein the first electrode includes an insulating glass layer along an edge in the first direction.

In the aforementioned aspect of the present invention, the insulating glass layer is formed in a long band shape along the edge of the first electrode. The insulating glass layer is formed on each edge of the first electrode, the insulating glass layers being separated from each other.

In addition, the first electrode includes a metal layer, and the insulating glass layer is formed in the same plane as the metal layer.

The insulating glass layer is adjacent to the metal layer, and a surface of the insulating glass layer is continuously inclined starting from an edge at the surface of the metal layer to the surface of the first substrate. The insulating glass layer may be formed to have an inclination so as to be curved.

The metal powder may be a silver (Ag) powder.

The first electrode may include a metal layer, and the metal layer and the insulating glass layer include frit of the same composition.

The first electrode may be supplied with an address voltage when driven.

There is provided the use of a composition comprising frit, a metal powder, and a vehicle for forming an electrode, wherein the metal powder and the frit are contained in a weight ratio of 52 to 62:5 to 15.

There is provided a plasma display panel comprising at least one electrode formed of a composition comprising frit, a metal powder, and a vehicle for forming an electrode, wherein the metal powder and the frit are contained in a weight ratio of 52 to 62:5 to 15.

Additional embodiments and/or advantages of the invention will be set forth in part in the description which follows and, in part, will be apparent from the description, or may be learned by practice of the invention.

The aforementioned aspects and advantages of the invention will become apparent and more readily appreciated from the following description of the embodiments, taken in conjunction with the accompanying drawings of which:
FIGURE 1 is a perspective view of a plasma display panel according to an embodiment of the present invention;
FIGURE 2 is a lateral cross-sectional view taken along line II-II of FIGURE 1;
FIGURE 3 is an enlarged photograph showing portion III of FIGURE 2;
FIGURE 4 is an enlarged photograph showing the planar shape of an address electrode of FIGURE 3;
FIGURE 5 is a schematic view showing a process of forming an address electrode of the present embodiment; and
FIGURE 6 is an enlarged photograph of a lateral cross-sectional view for comparing an address electrode of Experiment Example 1 and an address electrode of Comparison Example 1.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

With reference to the accompanying drawings, embodiments of the present invention will be described in order for those skilled in the art to be able to implement it. As those skilled in the art would realize, the described embodiments may be modified in various different ways, all without departing from the scope of the present invention..

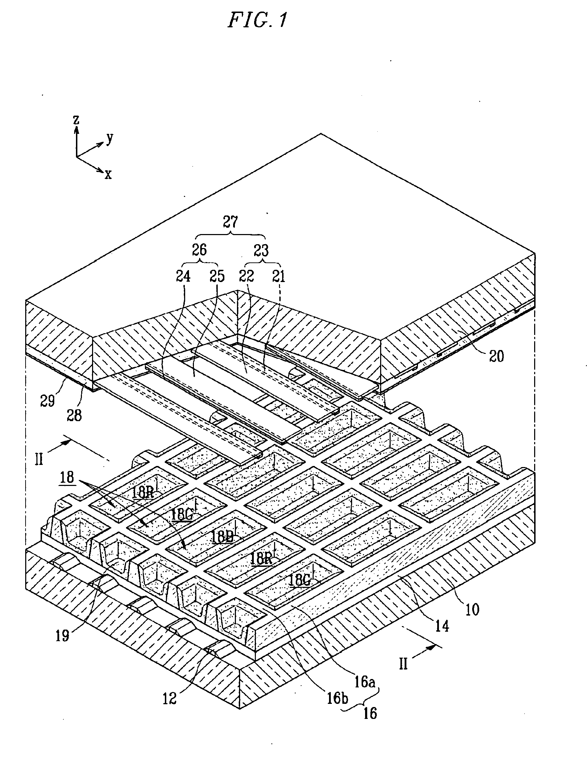

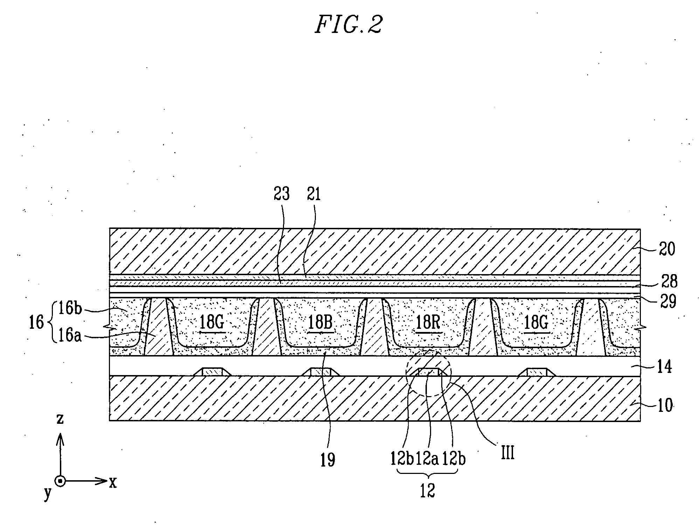

FIGURE 1 is a perspective view of a plasma display panel according to an embodiment of the present invention, and FIGURE 2 is a lateral cross-sectional view taken along line II-II of FIGURE 1.

Referring to FIGURE 1, the plasma display panel according to the present embodiment includes a first substrate 10 (hereinafter referred to as "rear substrate") and a second substrate 20 (hereinafter referred to as "front substrate"). The two substrates 10 and 20 face each other with a predetermined distance between them. The edges of the rear substrate 10 and the front substrate 20 are sealed with frit (not shown), thereby forming a sealed discharge space between the substrates. In the discharge space formed by the rear substrate 10 and the front substrate 20, a plurality of discharge cells 18, defined by a barrier rib 16, are disposed between the rear substrate 10 and the front substrate 20.

In the present embodiment, the barrier rib 16 is formed independently from the rear substrate 10 in such a manner that a dielectric paste for the barrier rib 16 is applied on the rear substrate 10 and is then patterned and annealed.

The barrier rib 16 includes vertical barrier members 16a formed in a first, long, direction (y-axis direction in the drawing) and horizontal barrier members 16b formed in a second, short , direction (x-axis direction in the drawing) perpendicular to the vertical barrier members 16a. Accordingly, the discharge cells 18 are defined in a grid pattern by the vertical barrier members 16a and the horizontal barrier members 16b.

However, the plasma display panel of the present invention is not limited thereto. Thus, besides the aforementioned grid pattern, the discharge cells 18 may be defined in further various patterns such as a linear and parallel pattern or a delta pattern.

Referring now to FIGURE 2, the address electrodes 12 are formed on the rear substrate 10. The address electrodes 12 correspond to the discharge cells 18 and extend in the first direction in a parallel manner.

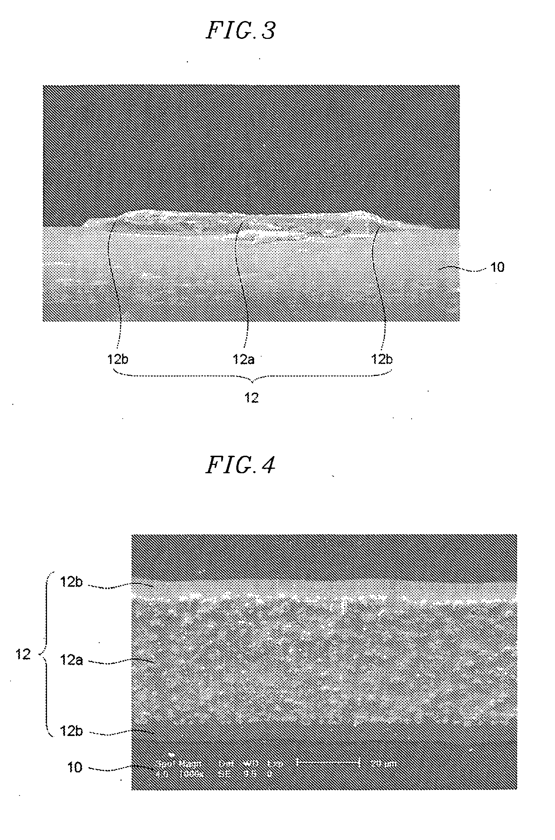

Each address electrode 12 includes a metal layer 12a and an insulating glass layer 12b. The insulating glass layer 12b is adjacent to both edges of the metal layer 12a and is formed on the same plane thereof. The address electrodes 12 will be described below in greater detail with reference to FIGURES 3 and 4.

A dielectric layer 14 (hereinafter referred to as "lower dielectric layer") is formed on the rear substrate 10 to cover the address electrodes 12. As described above, the barrier rib 16, which is disposed between the rear substrate 10 and the front substrate 20 to define the discharge cells 18, is formed on the lower dielectric layer 14.

Inside each discharge cell 18, phosphor layers 19 are formed on the lateral sides of the barrier rib 16 and on the lower dielectric layer 14. Inside the discharge cells 18 defined in the first direction, the phosphor layers 19 are formed of the same color phosphor material. Inside the discharge cells 18 defined in the second direction, the phosphor layers 19 are repeatedly formed of the phosphor materials of red (18R), green (18G), and blue (18B).

Now, referring back to FIGURE 1 as well as FIGURE 2, display electrodes 27 are formed on the front substrate 20. The display electrodes 27 correspond to the discharge cells 18 and extend in the second direction crossing the first direction. The display electrodes 27 are formed such that scan electrodes 23 and sustain electrodes 26, both of which correspond to the discharge cells 18, are included in pairs.

The scan electrodes 23 and the sustain electrodes 26 respectively include bus electrodes 21 and 24 extending along the horizontal barrier member 16b. Further, the scan electrodes 23 and the sustain electrodes 26 respectively include transparent electrodes 22 and 25 extending by a width in the second direction from the bus electrodes 21 and 24 towards the centers of the discharge cells 18.

The transparent electrodes 22 and 25 are formed on the front substrate 20 and extend in a linear and parallel orientation in the second direction so that the transparent electrodes 22 and 25 correspond to the discharge cells 18. In order to enhance transmissivity of visible light, the transparent electrodes 22 and 25 are formed of transparent ITO (indium-tin oxide).

However, the display electrodes 27 of the present invention are not limited to the aforementioned structure. Thus, the transparent electrodes 22 and 25 may correspond to discharge cells 18R, 18G, and 18B of red (R), green (G), and blue (B) and respectively protrude from the bus electrodes 21 and 24.

In order to compensate for a voltage drop caused by the transparent electrodes 22 and 25, the bus electrodes 21 and 24 are formed of a metal material having excellent electric conductivity. The bus electrodes 21 and 24 may be further adjacent to the lateral horizontal barrier members 16b between which one of the discharge cells 18 is interposed, in order to increase the transmissivity of visible light generated inside the discharge cells 18 due to a plasma discharge. The bus electrodes 21 and 24 may be disposed above the horizontal barrier members 16b.

A dielectric layer 28 (hereinafter referred to as "upper dielectric layer") is formed to cover the scan electrodes 23 and the sustain electrodes 26.

A passivation layer 29 is formed on the upper dielectric layer 28 to avoid damage from exposure to the plasma discharge occurring within the discharge cells 18. The passivation layer 29 may be formed of an MgO layer that can transmit visible light. The MgO layer protects the upper dielectric layer 28. Since the MgO layer has a high secondary electron emission coefficient, the discharge ignition voltage can be further lowered.

A discharge gas (e.g., a mixture gas containing xenon (Xe), neon (Ne), etc.) is filled inside the discharge cells 18 where the phosphor layers 19 of R, G, and B are formed to produce a plasma discharge.

According to the present embodiment, when the plasma display panel is driven, a reset discharge occurs in response to a reset pulse supplied to the scan electrodes 23 during a reset period. During a scan period following the reset period, an address discharge occurs in response to a scan pulse supplied to the scan electrodes 23 and an address pulse supplied to the address electrodes 12. Thereafter, during a sustain period, a sustain discharge occurs in response to a sustain pulse supplied to the sustain electrodes 26 and the scan electrodes 23.

The sustain electrodes 26 and the scan electrodes 23 serve as electrodes for supplying the sustain pulse required for the sustain discharge. The scan electrodes 23 serve as electrodes for supplying the reset pulse and the scan pulse. The address electrodes 12 serve as electrodes for supplying the address pulse. However, the sustain electrodes 26, the scan electrodes 23, and the address electrodes 12 may have different roles according to the waveforms of the voltages supplied thereto, and thus the present invention is not limited to the aforementioned roles of the electrodes.

Accordingly, an image is formed by selecting the discharge cells 18 to be turned on by an address discharge produced in response to an interaction between the address electrodes 12 and the scan electrodes 23. Thereafter, the selected discharge cells 18 are driven by a sustain discharge produced in response to an interaction between the sustain electrodes 26 and the scan electrodes 23.

The structure of an address electrode of the plasma display panel of the present embodiment will now be described in greater detail with reference to FIGURES 3 and 4.

FIGURE 3 is an enlarged photograph showing portion III of FIGURE 2, and FIGURE 4 is an enlarged photograph showing the planar shape of an address electrode of FIGURE 3.

Referring to FIGURES 3 and 4, an address electrode 12 includes a metal layer 12a and an insulating glass layer 12b. The insulating glass layer 12b is adjacent to both edges of the metal layer 12a and is formed on the same plane thereof. The metal layer 12a is formed on a rear substrate 10 and extends in the first direction. The metal layer 12a forms an electrical conductive layer for supplying an address voltage to each discharge cell 18.

The metal layer 12a may be formed of a material (e.g. silver (Ag)) having high electric conductivity and that is relatively inexpensive. The metal layer 12a is generally formed from a silver powder originally in a paste state. When subjected to a firing process from the paste state, the silver powder is solidified with frit, thereby maintaining the shape of an electrode.

The insulating glass layer 12b has a band shape in the first direction along both edges of the metal layer 12a on the same plane as the metal layer 12a. The surface (upper surface) of the insulating glass layer 12b is continuously inclined starting from an edge at the surface of the metal layer 12a to the surface of the rear substrate 10. The surface of the insulating glass layer 12b may be formed to have a gentle inclination so as to be curved, with the inclination such that the narrowest portion of the insulating glass layer 12b is at the top of the metal layer 12a and the widest portion is on the rear substrate 10.

As a result, the insulating glass layer 12b is formed on the rear substrate 10 to cover the address electrode 12, and forms an insulation layer at both edges of the metal layer 12a, the insulating glass layer 12b being distinguishable from the lower dielectric layer 14.

The insulating glass layer 12b is composed of frit that has the same component as the frit included in the metal layer 12a. The frit may be formed to have the same composition ratio. That is, the metal layer 12a is formed when its major component of metal powder is solidified with frit. The major component of the insulating glass layer 12b is frit and frit is integrated into the metal layer 12a as well. However, the insulating glass layer 12b is formed separately from the metal layer 12a.

The address electrode 12 contains a metal powder and a frit in a weight ratio of 52 to 62: 5 to 15.

If the weight ratio of the frit exceeds 15 or the weight ratio of the metal powder is less than 52, the electrical conductivity of the material is not sufficient, which leads to a decrease in electrical conductivity of the electrode. If the weight ratio of the frit is less than 5, or the weight ratio of the metal powder exceeds 62 , it becomes difficult to form an insulating glass layer along an edge of the electrode, which causes problems such as edge curl, a migration effect, etc.

The frit contains B₂O₃ and BaO, and the weight ratio of BaO to B₂O₃ is equal to or greater than 1, or in the range of 1 to 5. The frit is mixed with the metal powder so as to facilitate bonding of the metal particles. If the weight ratio of BaO to B₂O₃ is less than 1, the glass transition temperature increases to affect liquid-state sintering, while a weight ratio exceeding 5 results in low electrical conductivity. Besides the aforementioned components, the frit may contain SiO₂, PbO, Bi₂O₃, and ZnO.

As described above, in the address electrode 12 of the present embodiment, since the insulating glass layer 12b insulates both edges of the metal layer 12a, it is possible to prevent open circuits or short circuits that may occur when a migration effect takes place between adjacent electrodes.

When the width of the address electrode generally formed of silver and the distance between adjacent electrodes (pitch) is reduced, the address electrodes can be more densely disposed to correspond with discharge cells having small pitches, thereby achieving higher density in a plasma display panel.

The aforementioned structure of the address electrode may be obtained by using a composition ratio appropriate for an electrode-forming composition and a manufacturing process thereof.

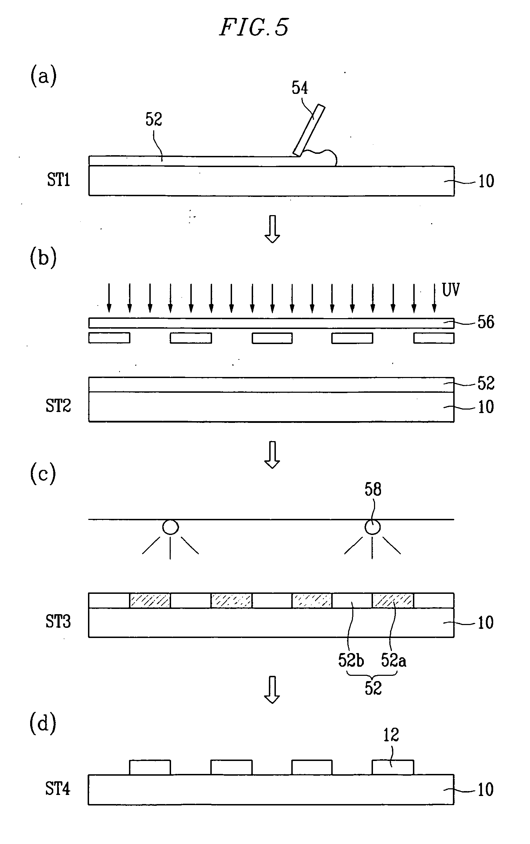

The process of forming an address electrode of the present embodiment will now be described with reference to FIGURE 5.

FIGURE 5 is a schematic view showing the process of forming an address electrode of the present embodiment.

Referring to FIGURE 5, the process of forming the address electrode of the present embodiment includes operations of forming an electrode layer (operation ST1), exposing/developing the electrode layer (operations ST2 and ST3), and firing the electrode layer (operation ST4).

In the operation of forming the electrode layer (operation ST1), as shown in FIGURE 5(a), an electrode-forming composition in a paste state is applied on the rear substrate 10 by using a squeegee 54. This is thereafter dried to form an electrode layer 52. The electrode-forming composition can also be printed on the substrate by a screen-printing method (not shown) and then dried.

In the present embodiment, the electrode-forming composition includes a metal powder, frit, and a vehicle. The metal powder and the frit may be contained in a weight ratio of 52 to 62: to 5 to 15.

If the weight ratio of the metal powder is less than 52, or the weight ratio of the frit exceeds 15, electrical conductivity of the material is not sufficient, which leads to a decrease in electrical conductivity of the electrode. If the weight ratio of the metal powder exceeds 62, or the weight ratio of the frit is less than 5, it becomes difficult to form an insulating glass layer along an edge of the electrode, which causes problems such as edge curl, a migration effect, etc.

In general, the metal powder is formed of an electrically conductive metal material forming the metal layer 12a. Any metal material generally used in the address electrode and the bus electrode may be used without particular restriction. Specifically, the metal powder may be selected from the group consisting of silver (Ag), gold (Au), aluminum (Al), copper (Cu), nickel (Ni), chromium (Cr), zinc (Zn), tin (Sn), an alloy of silver-palladium (Ag-Pd), and combinations thereof. When the firing process is performed in the air, silver (Ag) may be used because the electrical conductivity of silver is not reduced by air oxidation, and silver is relatively inexpensive.

The metal powder may have various shapes such as a granular shape, a spherical shape, or a flake shape. In addition, the metal powder may have one of these shapes alone or another shape in which two or more shapes thereof are combined. When optical and dispersion characteristics are taken into account, the metal powder should have the spherical shape.

When the frit is subjected to the firing process, the metal powder is solidified to form an electrode shape. The insulating glass layer 12b is formed at the edges of the electrode.

The frit provides an adhesive force between the metal powder and a substrate during the firing process. The frit may contain SiO₂, PbO, Bi₂O₃, ZnO, B₂O₃, and BaO.

In order to decrease the glass transition temperature, the weight ratio of BaO to B₂O₃ has to be greater than 1. This weight ratio may be in the range of 1 to 5. If the weight ratio of BaO to B₂O₃ is less than 1, the glass transition temperature increases to affect liquid phase sintering, and a weight ratio exceeding 5 results in low electrical conductivity.

The vehicle includes an organic solvent and a binder.

The organic solvent may be any one of organic solvents typically used in the art. Specifically, ketones (e.g. diethyl ketone, methyl butyl ketone, dipropyl ketone, cyclohexanone, etc.); alcohols (e.g. n-pentanol, 4-methyl-2-pentanol, cyclohexanol, diacetone alcohol, etc.); ether alcohols (e.g. ethylene glycol monomethyl ether, ethylene glycol monoethyl ether, ethylene glycol monobutyl ether, propylene glycol monomethyl ether, propylene glycol monoethyl ether, etc.); saturated fatty monocarboxylic acid alkyl esters (e.g. n-butyl acetate, amyl acetate, etc.); lactic acid esters (e.g. ethyl lactate, n-butyl lactate, etc.); and ether esters (e.g. , 2-methoxyethyl acetate, 2-ethoxyethyl acetate, propylene glycol monomethyl ether acetate, ethyl-3-epoxy propionate, 2,2,4-trimethyl-1,3-pentanediol mono(2-methylpropanoate), etc.). Any one of these organic solvents may be used alone or a combination of two or more thereof.

As the binder, a polymer that can be cross-linked by the use of a photo-initiator and is easily removed in the development process when an electrode is formed, may be used. Specifically, the binder may be selected from the group consisting of an acrylic resin, a styrene resin, a novolak resin, and a polyester resin, each of which is typically used when a photo-resist is formed. Alternatively, the binder may be one or more copolymers selected from a group consisting of a monomer (i), a monomer (ii), and a monomer (iii) listed below

### Monomer (i): Monomers Containing a Carboxyl Group

Examples of monomers containing a carboxyl group include acrylic acid, methacrylic acid, maleic acid, fumaric acid, crotonic acid, itaconic acid, citraconic acid, mesaconic acid, cinnamic acid, mono(2-(meth)acryloyloxyethyl)succinate or ω-carboxy-polycaprolactone-mono(meth)acrylate.

### Monomer (ii): Monomers Containing an OH Group

Examples of monomers containing an OH group include: aliphatic OH group monomers (e.g., 2-hydroxyethyl methacrylate, 2-hydroxypropyl methacrylate, 3-hydroxypropyl methacrylate, etc); and monomers containing a phenolic OH group (e.g. o-hydroxystyrene, m-hydroxystyrene, p-hydroxystyrene, etc.).

### Monomer (iii): Other Copolymerizable Monomers

Examples of other copolymerizable monomers include: methacrylic acid esters except for the monomer (i) (e.g. methyl methacrylate, ethyl methacrylate, n-butyl methacrylate, n-lauryl methacrylate, benzyl methacrylate, glycidyl methacrylate, dicyclopentanyl(meth)acrylate, etc.); aromatic vinyl monomers (e.g. styrene, α-methylstyrene, etc.); conjugated dienes (e.g. 1,3-butadiene, isoprene, etc.); and micro polymers having a polymerizable unsaturated group in the acid portion of the monomer (e. g. polystyrene, poly(methylmethacrylate), poly(ethylmethacrylate), poly(benzylmethacrylate), etc.).

When an electrode-forming composition is applied on a substrate so as to form the metal layer 12a, the binder should have an appropriate viscosity. In consideration of decomposition in the development process to be described below, the binder should have an average molecular weight in the range of 5000 to 50,000 and an acid value of 20 to 100 mg KOH/g. If the average molecular weight of the binder is less than 5000, it may affect the adhesiveness of the metal layer in the development process. An average molecular weight thereof exceeding 50,000 is not desirable since poor development is likely to occur. If the acid value is less than 20 mg KOH/g, the solubility against an alkaline aqueous solution is not sufficient, which is likely to result in poor development. An acid value exceeding 100 mg KOH/g is not desirable since it lowers the adhesiveness of the metal layer, or an exposed portion is dissolved during the development process.

The content of the organic solvent and the content of the binder may be properly controlled to attain a suitable viscosity of the electrode-forming composition for the application process.

The electrode-forming composition according to the present invention may further include a cross-linking agent and a photo-initiator.

The cross-linking agent is not particularly limited as long as it is a compound that is reactive to a radical polymerization reaction by the use of the photo-initiator. Specifically, the cross-linking agent may be a multifunctional monomer. Alternatively, one or more cross-linking agents may be selected from the group consisting of ethylene glycol diacrylate, ethylene glycol dimethacrylate, trimethylolpropane triacrylate, trimethylolpropane trimethacrylate, tetramethylolpropane tetraacrylate, pentaerythritol tetraacrylate, and tetramethylolpropane tetramethacrylate.

The cross-linking agent may be added in proportion to the content of the binder. Alternatively, 20 to 150 parts by weight of the cross-linking agent may be added for 100 parts by weight of the binder. If the content of the cross-linking agent is less than 20 parts by weight, exposure sensitivity in the exposure process decreases while an electrode is formed, and a defect may occur in an electrode pattern in the development process. On the contrary, if the content thereof exceeds 150 parts by weight, a line width increases after development, and thus the pattern is not clearly formed in the process of forming the electrode pattern. As a result, after firing, residuals may be produced around the electrode. For these reasons, the cross-linking agent may be used within the aforementioned content range.

The photo-initiator generates a radical during the exposure process. The material forming the photo-initiator is not particularly limited as long as it is a compound capable of initiating a cross-linking reaction of the cross-linking agent. Specifically, one or more photo-initiators may be selected from a group consisting of methyl-2-benzoylbenzoate, 4,4'-bis(dimethylamine)benzophenone, 2,2-diethoxyacetophenone, 2,2-dimethoxy-2-phenylacetophenone, 2-methyl-[4-(methylthio)phenyl]-2-morpholinopropionaldehyde, 2-benzyl-2-dimethylamino-1-(4-morpholinophenyl)butyraldehyde, 2,4-diethylthioxanthone, and (2,6-dimethoxydibenzoyl)-2,4,4-pentylphosphineoxide.

The photo-initiator may be added in proportion to the content of the cross-linking agent. Preferably, the photo-initiator may be added at 10 to 50 parts by weight with respect to 100 parts by weight of the cross-linking agent. In this case, if the content of the photo-initiator is less than 10 parts by weight, the exposure sensitivity of the electrode-forming composition deteriorates. If the content thereof exceeds 50 parts by weight, the line width of the exposure portion is reduced, or a non-exposure portion is not developed. Therefore, it is not possible to obtain a clear electrode pattern.

In addition to the aforementioned components, the electrode-forming composition according to the present invention may further include an additive agent if required.

Examples of the additive agent include: a sensitizer that improves sensitivity; a polymerization inhibitor and anti-oxidant that improves the preservation of the electrode-forming composition; an ultraviolet (UV) absorber that improves resolution; a defoamer that reduces foam contained in the paste; a dispersant that improves dispersibility; a leveling agent that improves the flatness of the layers during printing; and a plasticizer that provides a thixotropic characteristic.

The use of these additive agents is not mandatory but is optional. When added, the quantities of the additive agents are adjusted as necessary to meet the required quality of the composition..

In the exposure process (operation ST2), as shown in FIGURE 5(b), a mask 56 having an address electrode pattern is placed on the electrode layer 52, and the combination is irradiated with ultraviolet radiation (UV).

In the development process (operation ST3), as shown in FIGURE 5(c), a development solution is dispersed through a nozzle 58. The unexposed portion 52b is etched and dried, leaving unchanged that exposure portion 52a that had been irradiated with UV rays in the exposure operation (operation ST2).

In the firing process (operation ST4), as shown in FIGURE 5(d), the electrode portion remaining in the electrode layer is annealed, thereby forming the address electrode 12.

Through the firing process (operation ST4), the vehicle that is composed of the organic solvent, the binder, and the other additives in the electrode-forming composition is removed. Metal powder and frit remain therein.

Thus, the address electrode 12 includes the remaining metal powder and frit. The metal powder is solidified by the frit, thereby forming the metal layer 12a at the center of the address electrode 12. The frit forms the insulating glass layer 12b at both of the edges of the metal layer 12a (see FIGURES 3 and 4).

The above mechanism, in which the frit is formed at the edges of the metal layer 12a in the firing process (operation ST4) while forming the insulating glass layer 12b, may be considered as liquid-state sintering of typical ceramics.

In the first operation of the liquid-state sintering, that is, particle relocation, silver powder particles constituting the metal layer 12a move freely. The glass frit constituting the insulating glass layer 12b becomes a major drive force. After a neck is formed between the silver powder particles, the frit escapes to the outside of the silver powder particle-neck-silver powder particle combination.

When the glass frit escapes to the surface of the metal layer 12a, the number of open pores where only the silver powder particles can be present are significantly reduced.

The glass frit escapes partly to both ends of the metal layer 12a, and the insulating glass layer 12b continuously formed starting from an edge at the surface of the metal layer 12a to the surface of the rear substrate 10 is formed. In this case, referring to (b) of FIGURE 6, the insulating glass layer 12b may be formed to have a gentle curved slope with the widest part of the layer along the rear substrate 10.

The insulating glass layer 12b insulates both ends of the metal layer 12a so that the migration effect occurring between adjacent address electrodes 12 can be prevented.

Further, in the firing process (operation ST4), the insulating glass layer 12b evens out the differences of the compression load between the edges and the center of the metal layer 12a. Therefore, edge-curl whereby both edges of the metal layer 12a are curled up can also be prevented.

Now, experimental embodiments and comparison examples for the electrode-forming composition according to aspects of the present invention will be described. The experimental examples described below are only exemplary, and thus the present invention is not limited thereto.

### (Experimental Example 1)

150 g of frit material, which contained SiO₂, PbO, Bi₂O₃, ZnO, B₂O₃, and BaO and wherein the weight ratio of BaO to B₂O₃ was 1, 520 g of silver (Ag) powder, 50 g of a binder combining a methyl-methacrylate/methacrylic acid (MMA/MAA) copolymer, hydroxypropyl cellulose (HPC), ethyl cellulose (EC), and poly(isobutyl methacrylate) (PIBMA), 15 g of a photo-initiator that was2,2-dimethoxy-2-phenyl acetophenone, and 10 g of a cross-linking agent that was tetramethylolpropane-tetraacrylate were added to 255 ml of 2,2,4-trimethyl-1,3-pentanediol monoisobutyrate (for example, TEXANOL^{®} available from Eastman Chemical Corp.) and then were mixed in an agitator. Subsequently, a 3-roll mill was used to further promote agitation and dispersion. Thereafter, filtering and defoaming were performed. At this point, the electrode-forming composition was completely manufactured.

In the electrode-forming composition manufactured as described above, the metal powder and the frit were contained in a weight ratio of 52:15.

Next, a prepared glass substrate (10cm X 10cm) was cleaned and dried. Thereafter, the electrode-forming composition manufactured as described above was printed on the glass substrate by using a screen printing method. Then, the combination was dried in a dry oven at 100°C for 15 minutes to form a photosensitive conductive layer. A photo-mask, on which a striped pattern was formed, was disposed on the photo-sensitive conductive layer with a predetermined distance between them. Then, the masked combination was irradiated by UV rays of 450 mJ/cm² from a high pressure mercury lamp. The irradiated combination was now washed by a 0.4 weight % sodium carbonate aqueous solution at 35°C for 25 seconds wherein the sodium carbonate solution was introduced through a nozzle with a dispersion pressure of 147 099 Pa (1.5 kgf/cm²). The unexposed portion was then removed, thereby forming the desired electrode pattern.

Subsequently, firing was performed for 15 minutes at 580°C by using an electric firing furnace, thereby forming an electrode with a pattern having a layer depth of 4 µm.

An anisotropic conductive film (ACF) and a tape carrier package (TCP) were then placed on the patterned electrode. Pre-compression and main-compression were performed thereon to achieve bonding, thereby manufacturing a plasma display panel.

### (Experimental Example 2)

A plasma display panel was manufactured in the same manner as in Experimental Example 1 except that 50 g of frit, which contained SiO₂, PbO, Bi₂O₃, ZnO, B₂O₃, and BaO and wherein the weight ratio of BaO to B₂O₃ was 1, 620 g of a silver (Ag) powder, 55 g of a binder combining a methylmethacrylate/methacrylic acid (MMA/MAA) copolymer, hydroxypropyl cellulose (HPC), ethyl cellulose (EC), and poly(isobutyl methacrylate) (PIBMA), 15 g of a photo-initiator that was 2,2-dimethoxy-2-phenyl-acetophenone, and 10 g of a cross-linking agent that was tetramethylolpropane-tetraacrylate were added to 240 ml of 2,2,4-trimethyl-1,3-pentanediol monoisobutyrate and then were mixed in an agitator.

The electrode-forming composition manufactured in Experimental Example 2 contained the metal powder and the frit in a weight ratio of 62:5.

### (Experimental Example 3)

A plasma display panel was manufactured in the same manner as in Experimental Example 1 except that 100 g of frit, which contained SiO₂, PbO, Bi₂O₃, ZnO, B₂O₃, and BaO and wherein the weight ratio of BaO to B₂O₃ was 1, 580 g of a silver (Ag) powder, 56 g of a binder combining methylmethacrylate/methacrylic acid (MMA/MAA) copolymer, hydroxypropyl cellulose (HPC), ethyl cellulose (EC), and poly(isobutyl methacrylate) (PIBMA), 14 g of a photo-initiator that was2,2-dimethoxy-2-phenyl acetophenone, and 10 g of a cross-linking agent that was tetramethylolpropane-tetraacrylate were added to 240 ml of 2,2,4-trimethyl-1,3-pentanediol monoisobutyrate and then mixed in an agitator.

The electrode-forming composition manufactured in Experimental Example 3 contained the metal powder and the frit in a weight ratio of 58:10.

### (Comparison Example 1)

A plasma display panel was manufactured in the same manner as in Experimental Example 1 except that 30 g of frit, which contained SiO₂, PbO, Bi₂O₃, ZnO, B₂O₃, and BaO and wherein the weight ratio of BaO to B₂O₃ was 1, 650 g of a silver (Ag) powder, 57 g of a binder combining a methylmethacrylate/methacrylic-acid (MMA/MAA) copolymer, hydroxypropyl cellulose (HPC), ethyl cellulose (EC), and poly(isobutyl methacrylate) (PIBMA), 13 g of a photo-initiator that was2,2-dimethoxy-2-phenyl acetophenone, and 10 g of a cross-linking agent that was tetramethylolpropane-tetraacrylate were added to 240 ml of 2,2,4-trimethyl-1,3-pentanediol monoisobutyrate and then were mixed in an agitator.

The electrode-forming composition manufactured in Comparison Example 1 contained the metal powder and the frit in a weight ratio of 65:3.

FIGURE 6 is an enlarged photograph of a lateral cross-sectional view for comparing an address electrode of Experimental Example 1 and an address electrode of Comparison Example 1

Referring to FIGURE 6, address electrodes 112 and 12 of a plasma display panel manufactured in Experimental Example 1 and Comparison Example 1 were observed by using a scanning microscope. The results thereof are shown in FIGURE 6(b) and FIGURE 6(a).

FIGURE 6(b) is a photograph of the address electrode 12 of Experimental Example 1 viewed by the scanning microscope. FIGURE 6(a) is a photograph of the address electrode 112 of Comparison Example 1 viewed by the scanning microscope. Referring to FIGURE 6(b), the address electrode 12 of Experimental Example 1 was adjacent to both edges of the metal layer 12a. An insulating glass layer 12b was formed on the same plane thereof. On the other hand, referring to FIGURE 6(a), an edge-curl 112a was formed in the address electrode 112 of Comparison Example 1.

Accordingly, an electrode-forming composition of this aspect of the present invention included the metal powder and frit wherein the metal powder and the frit are contained in a weight ratio of 52 to 62: 5 to 15. The weight ratio of BaO to B₂O₃ contained in the frit was greater than 1. During the process of forming an electrode, the metal powder formed a metal layer by liquid-state sintering in the firing process. An insulating glass layer was formed on the outer surface of the metal layer.

A plasma display panel of this aspect of the present invention includes an electrode in which a glass layer is formed at the edges of a conductive metal layer. Thus, there is an advantage in that a migration effect occurring between adjacent electrodes and an edge-curl occurring at the edges of an electrode can be prevented.

Although the exemplary embodiments and the modified examples of the present invention have been described, the present invention is not limited to the embodiments and examples, but may be modified in various forms without departing from the scope of the appended claims, the detailed description, and the accompanying drawings of the present invention. Therefore, it is natural that such modifications belong to the scope of the present invention.

Although a few embodiments of the present invention have been shown and described, it would be appreciated by those skilled in the art that changes may be made to these embodiments without departing from the principles of the invention, the scope of which is as defined in the appended claims.

## Claims

1. A plasma display panel comprising:
first (10) and second (20) substrates that face each other with a predetermined distance therebetween;
a plurality of first electrodes (12) formed on the first substrate and extending in a first direction;
a dielectric layer (14) formed on the first substrate to cover the first electrode;
a second electrode (27) spaced apart from the first electrodes, formed on the second substrate, and extending in a second direction crossing the first direction;
a barrier rib (16) defining a plurality of discharge cells (18) in a space between the first substrate and the second substrate; and
a phosphor layer (19) formed within each discharge cell,
***characterized in that*** the first electrode includes an insulating glass layer (12b) along an edge in the first direction and a metal layer (12a);
and the insulating glass layer is formed in the same plane as and adjacent to the metal layer, and a surface of the insulating glass layer is continuously inclined starting from an edge at the surface of the metal layer to the surface of the first substrate; and the insulating glass layers of adjacent electrodes are separate from each other.

2. The plasma display panel of claim 1 wherein the insulating glass layer (12b) is formed in a band shape along each edge of the first electrodes.

3. The plasma display panel of any of claim 1 or claim 2, wherein the insulating glass layer (12b) is formed to have an inclination so as to be curved.

4. The plasma display panel of any one of claims 1 to 3, wherein the first electrodes (12) comprise a metal powder and frit, and the metal powder and the frit are contained in the weight ratio of 52 to 62: 5 to 15.

5. The plasma display panel of claim 4, wherein the frit is selected from the group consisting of SiO₂, PbO, Bi₂O₃, ZnO, B₂O₃, BaO, and combinations thereof.

6. The plasma display panel of claim 5, wherein the frit contains B₂O₃ and BaO, and the weight ratio of BaO to B₂O₃ is equal to or greater than 1.

7. The plasma display panel of claim 6, wherein the weight ratio of BaO to B₂O₃ is within a range of 1 to 5.

8. The plasma display panel of any one of claims 4 to 7, wherein the metal powder is selected from the group consisting of silver (Ag), gold (Au), aluminum (Al), copper (Cu), nickel (Ni), chromium (Cr), zinc (Zn), tin (Sn), an alloy of silver-palladium (Ag-Pd), and combinations thereof.

9. The plasma display panel of claim 8, wherein the metal powder is a silver (Ag) powder.

10. The plasma display panel of any preceding claim, wherein the metal layer (12a) is composed of a silver (Ag) powder.

11. The plasma display panel of any preceding claim, wherein the metal layer (12a) and the insulating glass layer (12b) include frit of the same component.

12. The plasma display panel of claim 11, wherein the frit of the metal layer (12a) and the frit of the insulating glass layer (12b) have the same composition ratio.

13. The plasma display panel of claim 11 or claim 12, wherein the frit is selected from the group consisting of SiO₂, PbO, Bi₂O₃, ZnO, B₂O₃, BaO, and combinations thereof.

14. The plasma display panel of claim 13, wherein the frit of the metal layer (12a) and the frit of the insulating glass layer (12b) include B₂O₃ and BaO, and the weight ratio of BaO to B₂O₃ is equal to or greater than 1.

15. The plasma display panel of claim 14, wherein the weight ratio of BaO to B₂O₃ is within a range of 1 to 5.

16. The plasma display panel of any preceding claim, wherein the first electrodes (12) are supplied with an address voltage when driven.

17. The plasma display panel of claim 1, wherein the dielectric layer (14) is formed on the first substrate (10) between the insulating glass layers (12b) of the adjacent ones of the first electrodes (12).

18. The plasma display panel according to claim 1, comprising:
a plurality of first electrodes (12); a dielectric layer (14) formed on the first substrate (10) to cover the first electrodes;
a plurality of second electrodes (27) spaced apart from the first electrodes;
wherein the insulating glass layer (12b) is provided along each edge of each first electrode extending in the first direction, and wherein the thickness of each insulating glass layer in a direction perpendicular to the first substrate decreases with increasing distance from the edge of the corresponding first electrode.

## Patentansprüche

1. Plasmaanzeigetafel, umfassend:
erste (10) und zweite (20) Substrate, die einander mit einem vorbestimmten Abstand dazwischen gegenüberliegen;
eine Mehrzahl von ersten Elektroden (12), die auf dem ersten Substrat ausgebildet sind und sich in einer ersten Richtung erstrecken;
eine dielektrische Schicht (14), die auf dem ersten Substrat ausgebildet ist, um die erste Elektrode abzudecken;
eine zweite Elektrode (27), die von den ersten Elektroden beabstandet ist, auf dem zweiten Substrat ausgebildet ist und sich in einer zweiten Richtung erstreckt, welche die erste Richtung kreuzt;
eine Sperrrippe (16), die eine Mehrzahl von Entladungszellen (18) in einem Raum zwischen dem ersten Substrat und dem zweiten Substrat definiert; und
eine Phosphorschicht (19), die innerhalb jeder Entladungszelle ausgebildet ist,
**dadurch gekennzeichnet, dass** die erste Elektrode eine isolierende Glasschicht (12b) entlang einer Kante in der ersten Richtung und eine Metallschicht (12a) umfasst;
und die isolierende Glasschicht in der gleichen Ebene wie die Metallschicht ausgebildet und benachbart dazu ist, und eine Oberfläche der isolierenden Glasschicht ausgehend von einer Kante an der Oberfläche der Metallschicht zur Oberfläche des ersten Substrats kontinuierlich geneigt ist; und
die isolierenden Glasschichten von benachbarten Elektroden voneinander getrennt sind.

2. Plasmaanzeigetafel nach Anspruch 1, wobei die isolierende Glasschicht (12b) in einer Bandform entlang jeder Kante der ersten Elektroden ausgebildet ist.

3. Plasmaanzeigetafel nach einem der Ansprüche 1 oder 2, wobei die isolierende Glasschicht (12b) so ausgebildet ist, dass sie eine Neigung aufweist, um gekrümmt zu sein.

4. Plasmaanzeigetafel nach einem der Ansprüche 1 bis 3, wobei die ersten Elektroden (12) ein Metallpulver und eine Fritte umfassen, und das Metallpulver und die Fritte im Gewichtsverhältnis von 52 bis 62:5 bis 15 enthalten sind.

5. Plasmaanzeigetafel nach Anspruch 4, wobei die Fritte aus der Gruppe bestehend aus SiO₂, PbO, Bi₂O₃, ZnO, B₂O₃, BaO und Kombinationen davon ausgewählt ist.

6. Plasmaanzeigetafel nach Anspruch 5, wobei die Fritte B₂O₃ und BaO enthält, und das Gewichtsverhältnis von BaO zu B₂O₃ gleich oder größer 1 ist.

7. Plasmaanzeigetafel nach Anspruch 6, wobei das Gewichtsverhältnis von BaO zu B₂O₃ innerhalb des Bereichs von 1 bis 5 liegt.

8. Plasmaanzeigetafel nach einem der Ansprüche 4 bis 7, wobei das Metallpulver aus der Gruppe bestehend aus Silber (Ag), Gold (Au), Aluminium (Al), Kupfer (Cu), Nickel (Ni), Chrom (Cr), Zink (Zn), Zinn (Sn), einer Legierung von Silber-Palladium (Ag-Pd) und Kombinationen davon ausgewählt ist.

9. Plasmaanzeigetafel nach Anspruch 8, wobei das Metallpulver ein Silber (AG)-Pulver ist.

10. Plasmaanzeigetafel nach einem der vorhergehenden Ansprüche, wobei die Metallschicht (12a) aus einem Silber (AG)-Pulver besteht.

11. Plasmaanzeigetafel nach einem der vorhergehenden Ansprüche, wobei die Metallschicht (12a) und die isolierende Glasschicht (12b) Fritte der gleichen Komponente umfassen.

12. Plasmaanzeigetafel nach Anspruch 11, wobei die Fritte der Metallschicht (12a) und die Fritte der isolierenden Glasschicht (12b) das gleiche Zusammensetzungsverhältnis aufweisen.

13. Plasmaanzeigetafel nach Anspruch 11 oder 12, wobei die Fritte aus der Gruppe bestehend aus SiO₂, PbO, Bi₂O₃, ZnO, B₂O₃, BaO und Kombinationen davon ausgewählt ist.

14. Plasmaanzeigetafel nach Anspruch 13, wobei die Fritte der Metallschicht (12a) und die Fritte der isolierenden Glasschicht (12b) B₂O₃ und BaO umfassen, und das Gewichtsverhältnis von BaO zu B₂O₃ gleich oder größer 1 ist.

15. Plasmaanzeigetafel nach Anspruch 14, wobei das Gewichtsverhältnis von BaO zu B₂O₃ innerhalb des Bereichs von 1 bis 5 liegt.

16. Plasmaanzeigetafel nach einem der vorhergehenden Ansprüche, wobei die ersten Elektroden (12) mit einer Adressspannung versorgt werden, wenn angesteuert.

17. Plasmaanzeigetafel nach Anspruch 1, wobei die dielektrische Schicht (14) auf dem ersten Substrat (10) zwischen den isolierenden Glasschichten (12b) der benachbarten der ersten Elektroden (12) ausgebildet ist.

18. Plasmaanzeigetafel nach Anspruch 1, umfassend:
eine Mehrzahl von ersten Elektroden (12); eine dielektrische Schicht (14), die auf dem ersten Substrat (10) ausgebildet ist, um die ersten Elektroden abzudecken;
eine Mehrzahl von zweiten Elektroden (27), die von den ersten Elektroden beabstandet sind;
wobei die isolierende Glasschicht (12b) entlang jeder Kante jeder ersten Elektrode vorgesehen ist, die sich in der ersten Richtung erstreckt, und wobei die Dicke jeder isolierenden Glasschicht in einer Richtung senkrecht auf das erste Substrat mit zunehmender Entfernung von der Kante der entsprechenden ersten Elektrode abnimmt.

## Revendications

1. Panneau d'affichage à plasma comprenant :
des premier (10) et deuxième (20) substrats se faisant face avec une distance prédéterminée entre eux ;
une pluralité de premières électrodes (12) formées sur le premier substrat et s'étendant dans une première direction ;
une couche diélectrique (14) formée sur le premier substrat pour couvrir la première électrode ;
une deuxième électrode (27) séparée des premières électrodes, formée sur le deuxième substrat, et s'étendant dans une deuxième direction croisant la première direction ;
une nervure de barrière (16) définissant une pluralité de cellules de décharge (18) dans un espace entre le premier substrat et le deuxième substrat ; et
une couche de phosphore (19) formée à l'intérieur de chaque cellule de décharge,
**caractérisé en ce que** la première électrode comprend une couche de verre isolant (12b) le long d'un bord dans la première direction et une couche métallique (12a) ;
et la couche de verre isolant est formée dans le même plan que la couche métallique et lui est adjacente, et une surface de la couche de verre isolant est inclinée en permanence à partir d'un bord au niveau de la surface de la couche métallique vers la surface du premier substrat ; et les couches de verre isolant des électrodes adjacentes sont séparées les unes des autres.

2. Panneau d'affichage à plasma de la revendication 1 dans lequel la couche de verre isolant (12b) est façonnée en forme de bande le long de chaque bord des premières électrodes.

3. Panneau d'affichage à plasma de l'une de la revendication 1 ou de la revendication 2, dans lequel la couche de verre isolant (12b) est formée de manière à avoir une inclinaison la rendant incurvée.

4. Panneau d'affichage à plasma de l'une quelconque des revendications 1 à 3, dans lequel les premières électrodes (12) comprennent une poudre de métal et une fritte, et la poudre métallique et la fritte sont contenues dans le rapport pondéral de 52 à 62 : 5 à 15.

5. Panneau d'affichage à plasma de la revendication 4, dans lequel la fritte est sélectionnée dans le groupe constitué de SiO₂, PbO, Bi₂O₃, ZnO, B₂O₃, BaO, et de leurs combinaisons.

6. Panneau d'affichage à plasma de la revendication 5, dans lequel la fritte contient B₂O₃ et BaO, et le rapport pondéral de BaO sur B₂O₃ est supérieure ou égal à 1.

7. Panneau d'affichage à plasma de la revendication 6, dans lequel le rapport pondéral de BaO sur B₂O₃ est dans la plage comprise entre 1 et 5.

8. Panneau d'affichage à plasma de l'une quelconque des revendications 4 à 7, dans lequel la poudre métallique est sélectionnée dans le groupe constitué d'argent (Ag), d'or (Au), d'aluminium (Al), de cuivre (Cu), de nickel (Ni), de chrome (Cr), de zinc (Zn), d'étain (Sn), d'un alliage argent-palladium (Ag-Pd), et de leurs combinaisons.

9. Panneau d'affichage à plasma de la revendication 8, dans lequel la poudre métallique est de la poudre d'argent (Ag).

10. Panneau d'affichage à plasma de l'une des revendications précédentes, dans lequel la couche métallique (12a) est composée d'une poudre d'argent (Ag).

11. Panneau d'affichage à plasma de l'une des revendications précédentes, dans lequel la couche métallique (12a) et la couche de verre isolant (12b) comprennent une fritte du même composant.

12. Panneau d'affichage à plasma de la revendication 11, dans lequel la fritte de la couche métallique (12a) et la fritte de la couche de verre isolant (12b) ont le même rapport de composition.

13. Panneau d'affichage à plasma de la revendication 11 ou de la revendication 12, dans lequel la fritte est sélectionnée dans le groupe constitué par SiO₂, PbO, Bi₂O₃, ZnO, B₂O₃, BaO, et de leurs combinaisons.

14. Panneau d'affichage à plasma de la revendication 13, dans lequel la fritte de la couche métallique (12a) et la fritte la couche de verre isolant (12b) comprennent B₂O₃ et BaO, et le rapport pondéral de BaO sur B₂O₃ est supérieur ou égal à 1.

15. Panneau d'affichage à plasma de la revendication 14, dans lequel le rapport pondéral de BaO sur B₂O₃ est dans la plage comprise entre 1 et 5.

16. Panneau d'affichage à plasma de l'une des revendications précédentes, dans lequel les premières électrodes (12) sont alimentées d'une tension d'adressage lorsqu'elles sont attaquées.

17. Panneau d'affichage à plasma de la revendication 1, dans lequel la couche diélectrique (14) est formée sur le premier substrat (10) entre les couches de verre isolant (12b) des électrodes adjacentes parmi les premières électrodes (12).

18. Panneau d'affichage à plasma de la revendication 1, comprenant :
une pluralité de premières électrodes (12) ; une couche diélectrique (14) formée sur le premier substrat (10) pour couvrir les premières électrodes ;
une pluralité de deuxièmes électrodes (27) séparées des premières électrodes ;
où la couche de verre isolant (12b) est prévue le long de chaque bord de chaque première électrode s'étendant dans la première direction, et où l'épaisseur de chaque couche de verre isolant dans une direction perpendiculaire au premier substrat diminue suivant la distance croissante à partir du bord de la première électrode correspondante.
